# EUROPEAN PATENT APPLICATION

(11) **EP 1 790 820 A2**
(43) Date of publication of application: **30.05.2007**
(21) Application number: 06124886.0
(22) Date of filing: 28.11.2006
(51) Int. Cl.: F01D 5/18

(54) **A method for creating a serpentine cooling circuit in a turbine blade**

(30) Priority: 28.11.2005 US 287677
(71) Applicant: The General Electric Company, Schenectady NY 12345 (US)
(72) Inventor: MAIER, Mark Stefan, Greer, SC 29650 (US); BRITTINGHAM, Robert Alan, Piedmont, SC 29673 (US)
(74) Representative: Illingworth-Law, William Illingworth

(57) **Abstract**

Disclosed is a method for creating a cooling circuit (22) in a turbine blade (10) which includes forming an airfoil (16) including a tip end (17) and a root end (18), forming or associating at least one coolant turn (24) at least partially within the airfoil (16), and boring at least one coolant bore (23) from at least one of the tip end (17) and root end (18) to communicate with at least one coolant turn (24).

## Description

### FIELD OF THE INVENTION

This disclosure relates generally to a method for creating a serpentine cooling circuit in a turbine blade, and more particularly to creating a serpentine cooling circuit in a turbine blade having any aspect ratio.

### BACKGROUND OF THE INVENTION

A gas turbine engine includes a compressor, combustor, and turbine. The compressor compresses air to be channeled to the combustor, wherein the air is mixed with fuel and ignited to generate combustion gases. These combustion gases flow downstream through one or more stages of the turbine, which extracts energy therefrom.

The turbine includes rows of turbine blades secured to a rotor. Gas turbine blades broadly consist of a dovetail, shank, and airfoil. The dovetail anchors the turbine blade to a rotating shaft, from which a series of buckets radially extend. The shank serves as a base for the airfoil, which connects to the shank at a root end and is shaped to convert the thermal and kinetic energy of the flow path combustion gases into mechanical rotation of the rotor. Coolant generally enters the blade through the dovetail or sides of the shank.

Because turbine blades must operate within a high temperature environment created by combustion gases, blade cooling methods are needed to maintain a useful blade life cycle. One such cooling method takes advantage of simple convection cooling by providing holes running from root to tip of the airfoil. This method is effective in moderately high temperature environments.

However, in a higher temperature environment, a more active and effective cooling method, known as serpentine cooling, is generally desired and selected. A serpentine cooling system generally employs a number of coolant transporting passages which run from root-to-tip-to-root of the airfoil as many times as needed for a particular cooling design, effectively allowing coolant to circulate throughout the airfoil.

Circulation of the coolant, whether from lead edge to trail edge or trail edge to lead edge, allows coolant a greater amount of surface area contacted and heat transfer coefficient generated than does a single pass convection cooling system, thus making serpentine coolant systems the more efficient option in high temperature environments.

While serpentine designed airfoils are an efficient cooling option for higher temperature environments, casting a serpentine design within an airfoil, particularly a high aspect ratio airfoil, can be a difficult process. Serpentine design airfoils are typically created using a ceramic core in an investment casting process. While this method is adequate when casting for a relatively low aspect ratio (short and wide) serpentine airfoil, the ceramic core produced in the investment casting process for a high aspect ratio serpentine airfoil can be prone to cracking, breaking, or moving during the casting process, making their production cost prohibitive.

Since airfoils having a serpentine design coolant system cannot be effectively produced for applications requiring a high aspect ratio, and single pass convection cooling designs may not be able to efficiently cool an airfoil in a higher temperature environment, there is a need for a method which allows a serpentine circuit to be robustly and cost effectively created in an airfoil of any aspect ratio, particularly airfoils of high aspect ratios which are used in high temperature environments.

### BRIEF DESCRIPTION OF THE INVENTION

Disclosed is a method for creating a serpentine cooling circuit in a turbine blade, wherein one embodiment includes forming an airfoil including a tip end and a root end, associating at least one coolant turn with the airfoil, and boring at least one coolant bore from at least one of the tip end and root end to communicate with the at least one coolant turn.

Disclosed is an additional method for creating a serpentine cooling circuit in a turbine blade, wherein an additional embodiment includes forming an airfoil including a tip end and a root end, forming at least one coolant turn at least partially within the airfoil, and-boring at least one coolant bore from at least one of the tip end and root end to communicate with the at least one coolant turn.

### BRIEF DESCRIPTION OF THE DRAWINGS

The foregoing and other features and advantages of the present invention should be more fully understood from the following detailed description of illustrative embodiments taken in conjuncture with the accompanying Figures in which like elements are numbered alike in the several Figures:
Figure 1 is a side view of an exemplary embodiment of a serpentine design turbine blade in accordance with the present disclosure;
Figure 2 is a block diagram illustrating a first method for creating a serpentine cooling circuit in a turbine blade; and
Figure 3 is a block diagram illustrating a second method for creating a serpentine cooling circuit in a turbine blade.

### DETAILED DESCRIPTION OF THE INVENTION

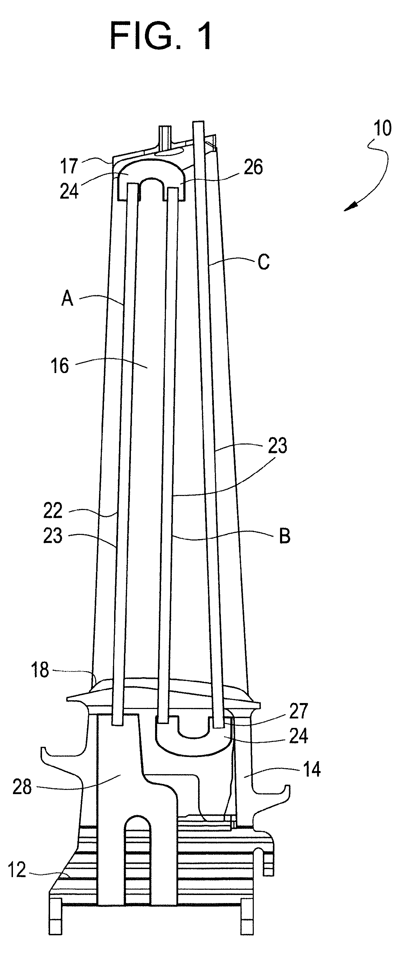

Referring to FIGURE 1, an example of a serpentine design turbine blade 10 is illustrated and includes a dovetail 12, a shank 14, and an airfoil 16. The airfoil 16 may be of any aspect ratio, and includes a tip end 17 and a root end 18. The root end 18 of the airfoil 16 is associated with the shank 14. The shank 14 is in turn associated with the dovetail 12, allowing the airfoil 16, shank 14, and dovetail 12 to form a unitary structure. The dovetail 12 mounts the turbine blade 10 to a rotor (not shown).

A cooling circuit 22 is at least partially defined by the airfoil 16, and transports coolant throughout the turbine blade 10. The cooling circuit 22 includes at least one coolant bore 23 and at least one coolant turn 24. The at least one coolant bore 23 is illustrated as coolant bores A, B, and C, and may be referred to henceforth in the singular for the purpose of simplicity. Similarly, the at least one coolant turn 24 is illustrated as two turns, a tip turn 26 and root turn 27, and may also be referred to henceforth in the singular for the purpose of simplicity. It is to be understood that referring to these components in the singular in no way limits the scope of the invention.

The coolant bores 23 are fluidly communicated with the coolant turns 24 to comprise the continuous cooling circuit 22, wherein the coolant turn 24, as the name implies, facilitates a directional altering of coolant traveling from one coolant bore 23 to the next within the cooling circuit 22. It should be appreciated that the number and position (along the airfoil or in fluid communication therewith) of the coolant bores 23 and coolant turns 24 may vary depending upon the operational parameters to be experienced by the airfoil 16. At least one of the coolant bores 23 may also function as a coolant inlet for the turbine blade 10, if the coolant bore 23 extends through the root end 18 of the airfoil 16. Alternatively, the dovetail 12 and shank 14 may at least partially define an inlet cavity 28, wherein the inlet cavity 28 would supply coolant to the turbine blade 10 via communication with a cooling circuit 22.

As will be further appreciated by reference to FIGURE 1, each coolant bore 23 may be substantially straight in construction, and created by a post forming/casting process utilizing drilling, milling, and other procedures further enumerated hereinbelow. Post casting boring avoids the cracking common in the ceramic core of high aspect ratio airfoils 16 which are formed to include coolant bores 23. These substantially straight coolant bores 23 are interconnected by the separately created but fluidly connected coolant turns 24.

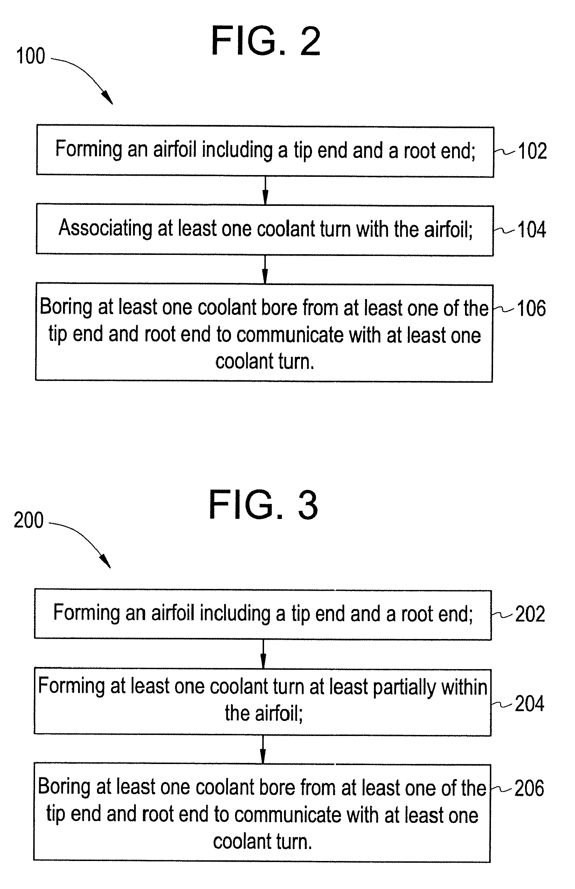

Referring to FIGURE 2, a first embodiment of a method 100 for creating a serpentine cooling circuit in a turbine blade, which may be used in a land based turbine or aircraft engine, is illustrated and includes forming an airfoil 16 including a tip end 17 and a root end 18, as shown in Operational Block 102. The airfoil 16 may comprise any material such as for example directionally solidified alloy, equiaxed (similarly sized, omni-directional grains) alloy, and single crystal alloy, wherein the airfoil 16 may be formed via a casting process, including a casting process which uses a ceramic core inside an airfoil investment casting. Ultimately, the at least one coolant bore 23 will be created within the airfoil 16 after airfoil 16 formation. However, because there are other components that may be formed with the airfoil 16 or attached thereto prior to formation of the coolant bores 23, the process by which the coolant bores 23 are created is described later in the specification.

In addition to forming the airfoil 16, the method 100 may also include forming a dovetail 12 (though an oversized area is typically formed for later dovetail machining) and a shank 14, wherein the dovetail 12, shank 14, and airfoil 16 may be formed as a unitary structure comprising a turbine blade 10. Like the airfoil 16, the dovetail 12 and shank 14 may comprise any material such as for example directionally solidified alloy, equiaxed alloy, and single crystal alloy, and be formed via a casting process, which may include casting of the dovetail 12 and shank 14 using a ceramic core inside an investment casting.

The method 100 may also include forming an inlet cavity 28 within the dovetail 12 and shank 14 (or general shank 14 vicinity) during the formation process, or creating the inlet cavity 28 within at least one of the dovetail 12 and shank 14 after each has been formed. If the inlet cavity 28 is formed during the formation process, formation may be achieved via a casting process, which may include use of a ceramic core inside an investment casting. If the inlet cavity 28 is created within (as opposed to formed within) at least one of the dovetail 12 and shank 14 after the dovetail 12 and shank 14 have been formed, the inlet cavity 28 may be created via methods such as but not limited to milling, water jet drilling, rotary grinding, electrical discharge machining, and electrochemical machining, which may itself include shaped tube electrolytic machining, capillary drilling, electrosteam drilling, and electrojet machining. Whether formed or created within at least one of the dovetail 12 and shank 14, the inlet cavity 28 extends from the rotor to the airfoil 16 so as to supply coolant to the turbine blade 10.

Referring to Operational Block 104 in Figure 2, the method 100 may further include associating at least one coolant turn 24 with the airfoil 16. Association of the coolant turn 24 and airfoil 16 may take place after the airfoil 16 has been formed, and may be accomplished by securely associating or affixing a separate turn structure to the airfoil 16 via methods such as but not limited to welding, brazing, or soldering, wherein the turn structure may comprise the same material as the airfoil 16, as well as a different material. For example, at least one tip turn 26 and/or a root turn 27 may be securely affixed to the tip end 17 and/or root end 18 of the airfoil 16 via a welding, brazing, or soldering process.

Another manner of associating the at least one coolant turn 24 with the airfoil 16 may be accomplished by creating (as opposed to securely adding) at least one coolant turn cavity within the structure of the already formed airfoil 16, and closing/sealing the coolant turn cavity with a sealing structure. Creation of the at least one coolant turn cavity may be accomplished via methods such as but not limited to milling, water jet drilling, rotary grinding, electrical discharge machining, and electrochemical machining, which may itself include shaped tube electrolytic machining, capillary drilling, electrosteam drilling, and electrojet machining. Any opening left behind by the instrument used to create the at least one coolant turn cavity may then be closed and sealed via welding, soldering, or brazing, or by affixing at least one sealing structure (which may or may not comprise the same material as the airfoil 16) to the airfoil 16 via a method such as but not limited to welding, soldering, or brazing. Closing the at least one coolant turn cavity with the at least one sealing structure thus creates the at least one coolant turn 24. This method may be employed to create the at least one coolant turn 24 within the tip end 17, root end 18, and/or any other area of the airfoil 16.

As briefly noted above, the method 100 also includes boring the at least one coolant bore 23 from at least one of the tip end 17 and root end 18 to communicate with the at least one coolant turn 24, as shown in Operational Block 106, thus forming a cooling circuit 22. The at least one coolant bore 23 may also be bored to communicate with the inlet cavity 28. Boring may be accomplished via methods such as but not limited to milling, water jet drilling, rotary grinding, electrical discharge machining, and electrochemical machining, which may itself include shaped tube electrolytic machining, capillary drilling, electrosteam drilling, and electrojet machining. Boring of the at least one coolant bore 23 via these or any other methods takes place after the airfoil 16 has been formed. In the event that the at least one coolant bore 23 is bored through an affixed or created coolant turn 24, the opening(s) left behind by the instrument used to bore must be closed or at least partially restricted. Similarly, if the at least one coolant bore 23 is bored in any way which creates an undesired opening that opens outside of the serpentine coolant circuit, that opening must also be closed. These openings may be closed via welding, soldering, or brazing, or be closed by affixing at least one sealing structure (which may or may not comprise the same material as the airfoil 16) to the airfoil 16 via a method such as but not limited to welding, soldering, or brazing.

Boring the at least one coolant bore 23 within an already formed airfoil 16 eliminates the need for forming the coolant bores 23 within the airfoil 16 during the forming process. When, for example, a high aspect ratio airfoil 16 is formed via an investment casting procedure, and that airfoil 16 is formed to include a serpentine cooling circuit 22, the ceramic core of that cooling circuit 22 can move and often break during casting or handling because of weakness due to the presence of the formed/cast cooling bores 23. By eliminating the cooling circuit 22 ceramic core, this weakness is greatly diminished. Thus, by boring the at least one coolant bore 23 within a previously formed airfoil 16, a serpentine cooling circuit 22 may be robustly created in an airfoil 16 of any aspect ratio.

It should be appreciated that the method 100 may also include boring the at least one coolant bore 23 in a manner which produces heat transfer enhancement geometries, such as turbulations, within the at least one cooling circuit 22. Heat transfer enhancement geometries may be formed by manipulating any of the above grinders, machines, or drills to create discontinuities in the walls of the coolant bores 23 during the boring process.

It should be additionally appreciated that though FIGURE 1 illustrates a particular serpentine design, the method 100 may include associating the at least one coolant turn 24 at least partially within or upon the airfoil 16 in any manner and/or any position which allows coolant within the at least one cooling circuit 22 to alter direction. The at least one coolant bore 23 and the at least one coolant turn 24 may also be shaped and sized in any manner suitable to the desired end purpose of transporting coolant.

Referring to FIGURE 3, a second embodiment 200 of a method for creating a cooling circuit in a turbine blade 200 is illustrated and, like the method 100 of the first embodiment, includes forming an airfoil 16 including a tip end 17 and a root end 18, as shown in Operational Block 202. The airfoil 16 may comprise any material such as for example directionally solidified alloy, equiaxed alloy, and single crystal alloy, wherein the airfoil 16 may be formed via a casting process, including a casting process which uses a ceramic core inside an airfoil investment casting. Ultimately, at least one coolant bore 23 will be created within the airfoil 16 after airfoil 16 formation. However, because there are other components that may be formed with the airfoil 16 or attached thereto prior to formation of the coolant bores 23, the process by which the coolant bores 23 are created is described later in the specification.

In addition to forming the airfoil 16, the method 200 may also include forming a dovetail 12 (though an oversized area is typically formed for later dovetail machining) and a shank 14, wherein the dovetail 12, shank 14, and airfoil 16 may be formed as a unitary structure comprising a turbine blade 10. Like the airfoil 16, the dovetail 12 and shank 14 may comprise any material such as for example directionally solidified alloy, equiaxed alloy, and single crystal alloy, and be formed via a casting process, which may include casting of the dovetail 12 and shank 14 using a ceramic core inside an investment casting.

The method 200 may also include forming an inlet cavity 28 within the dovetail 12 and shank 14 (or general shank 14 vicinity) during the formation process, or creating the inlet cavity 28 within at least one of the dovetail 12 and shank 14 after each has been formed. If the inlet cavity 28 is formed during the formation process, formation may be achieved via a casting process, which may include use of a ceramic core inside an investment casting. If the inlet cavity 28 is created within (as opposed to formed within) at least one of the dovetail 12 and shank 14 after the dovetail 12 and shank 14 have been formed, the inlet cavity 28 may be created via methods such as but not limited to milling, water jet drilling, rotary grinding, electrical discharge machining, and electrochemical machining, which may itself include shaped tube electrolytic machining, capillary drilling, electrosteam drilling, and electrojet machining. Whether formed or created within at least one of the dovetail 12 and shank 14, the inlet cavity 28 extends from the rotor to the airfoil 16 so as to supply coolant to the turbine blade 10.

Referring to Operational Block 204, the method 200, unlike the method 100 of the first embodiment, may further include forming at least one coolant turn 24 at least partially within the airfoil 16 during the airfoil 16 forming process. Forming of the at least one coolant turn 24 may be achieved via a casting process, wherein the at least one coolant turn 24 may be cast using a ceramic core created in an investment casting procedure. If the forming process leaves a portion of the at least one coolant turn 24 open to the local turbine atmosphere, that opening may eventually be closed and sealed by welding soldering or brazing, or by affixing at least one sealing structure (which may or may not comprise the same material as the airfoil 16) to the airfoil 16 via a process such as but not limited to welding, soldering, or brazing.

As briefly mentioned above, the method 200 goes on to include boring the at least one coolant bore 23 from at least one of the tip end 17 and root end 18 to communicate with at the least one coolant turn 24, as shown in Operational Block 206, thus forming a cooling circuit 22. The at least one coolant bore 23 may also be bored to communicate with the inlet cavity 28. Boring may be accomplished via methods such as but not limited to milling, water jet drilling, rotary grinding, electrical discharge machining, and electrochemical machining, which may itself include shaped tube electrolytic machining, capillary drilling, electrosteam drilling, and electrojet machining. Boring of the at least one coolant bore 23 via these or any other methods takes place after the airfoil 16 has been formed. In the event that the at least one coolant bore 23 is bored through a formed coolant turn 24, the opening(s) left behind by the instrument used to bore must be closed or at least partially restricted. Similarly, if the at least one coolant bore 23 is bored in any way which creates an undesired opening that opens outside of the serpentine coolant circuit, that opening must also be closed. These openings may be closed via welding, soldering, or brazing, or by affixing at least one sealing structure (which may or may not comprise the same material as the airfoil 16) to the airfoil 16 via a method such as but not limited to welding, soldering, or brazing.

Boring the at least one coolant bore 23 to communicate with already formed coolant turns 24 within an already formed airfoil 16, eliminates the need for forming the coolant bores 23 within the airfoil 16 during the forming process. When, for example, a high aspect ratio airfoil 16 is formed via an investment casting process, and that airfoil 16 is formed to include the coolant bores 23, the ceramic core of that cooling circuit 22 can move and often break during casting or handling because of weakness due to the presence of the formed/cast coolant bores 23. By eliminating the coolant bores 23 from the ceramic core, this weakness is greatly diminished. Thus, by boring the at least one coolant bore 23 within a previously formed airfoil 16, a serpentine cooling circuit 22 may be robustly created in an airfoil 16 of any aspect ratio.

It should be appreciated that the method 200 may also include boring the at least one coolant bore 23 in a manner which produces heat transfer enhancement geometries, such as turbulations, within the at least one cooling circuit 22. Heat transfer enhancement geometries may be formed by manipulating any of the above grinders, machines, or drills to create discontinuities in the walls of the coolant bore 23 during the boring process.

It should be additionally appreciated that though FIGURE 1 illustrates a particular serpentine design, the method 200 may include forming the at least one coolant turn 24 to be disposed in any position along or within the airfoil 16 which allows coolant within the at least one cooling circuit 22 to alter direction. The at least one coolant bore 23 and the at least one coolant turn 24 may also be shaped and sized in any manner suitable to the desired end purpose of transporting coolant.

While the invention has been described with reference to an exemplary embodiment, it should be understood by those skilled in the art that various changes may be made and equivalents may be substituted for elements thereof without departing from the scope of the invention. In addition, many modifications may be made to adapt a particular situation or substance to the teachings of the invention without departing from the scope thereof. Therefore, it is important that the invention not be limited to the particular embodiment disclosed as the best mode contemplated for carrying out this invention, but that the invention will include all embodiments falling within the scope of the apportioned claims. Moreover, unless specifically stated any use of the terms first, second, etc. do not denote any order or importance, but rather the terms first, second, etc. are used to distinguish one element from another.

## Claims

1. A method for creating a serpentine cooling circuit (22) in a turbine blade (10), the method comprising:
forming an airfoil (16) including a tip end (17) and a root end (18);
associating at least one coolant turn (24) with said airfoil (16); and
boring at least one coolant bore (23) from at least one of said tip end (17) and said root end (18) to communicate with said at least one coolant turn (24).

2. A method for creating a serpentine cooling circuit (22) in a turbine blade (10) according to claim 1, wherein said airfoil (16) is formed via a casting process.

3. A method for creating a serpentine cooling circuit (22) in a turbine blade (10) according to claim 1, further including forming a shank (14) and a dovetail (12) .

4. A method for creating a serpentine cooling circuit (22) in a turbine blade (10) according to claim 3, further including forming an inlet cavity (28) within at least one of said shank (14) and said dovetail (12).

5. A method for creating a serpentine cooling circuit (22) in a turbine blade (10) according to claim 3, further including creating an inlet cavity (28) within at least one of said shank (14) and said dovetail (12) after forming of said shank (14) and said dovetail (12).

6. A method for creating a serpentine cooling circuit (22) in a turbine blade (10) according to claim 1, further including producing heat transfer enhancement geometries within said at least one coolant bore (23).

7. A method for creating a serpentine cooling circuit (22) in a turbine blade (10), the method comprising:
forming an airfoil (16) including a tip end (17) and a root end (18);
forming at least one coolant turn (24) at least partially within said airfoil (16); and
boring at least one coolant bore (23) from at least one of said tip end (17) and said root end (18) to communicate with said at least one coolant turn (24).

8. A method for creating a serpentine cooling circuit (22) in a turbine blade (10) according to claim 7, wherein said airfoil (16) and said at least one coolant turn (24) are formed via a casting process.

9. A method for creating a serpentine cooling circuit (22) in a turbine blade (10) according to claim 7, further including forming a shank (14) and a dovetail (12).

10. A method for creating a serpentine cooling circuit (22) in a turbine blade (10) according to claim 9, further including forming an inlet cavity (28) within at least one of said shank (14) and said dovetail (12).
